# EUROPÄISCHE PATENTANMELDUNG

(11) **EP 2 896 847 A2**
(43) Veröffentlichungstag der Anmeldung: **22.07.2015**
(21) Anmeldenummer: 14194767.1
(22) Anmeldetag: 25.11.2014
(51) Int. Cl.: F16D 13/75

(54) **Reibungskupplung sowie Verfahren zum Nachstellen eines verschleißbedingten Fehlabstands in einer Reibungskupplung**

(30) Priorität: 17.01.2014 DE 102014200787
(71) Anmelder: Schaeffler Technologies AG & Co. KG, 91074 Herzogenaurach (DE)
(72) Erfinder: Ahnert, Gerd, 77880 Sasbach (DE)

(57) **Zusammenfassung**

Es ist eine Reibungskupplung, insbesondere zum Kuppeln einer Antriebswelle eines Kraftfahrzeugmotors mit mindestens einer Getriebeeingangswelle eines Kraftfahrzeuggetriebes, vorgesehen mit einer axial verlagerbaren Anpressplatte zum Verpressen einer Kupplungsscheibe zwischen der Anpressplatte und einer Gegenplatte, einem, insbesondere als Hebelfeder ausgestaltetem, Betätigungselement zum Verlagern der Anpressplatte, einem in axialer Richtung zwischen der Anpressplatte und dem Betätigungselement angeordneten relativ verdrehbaren Rampenring zur Veränderung eines axialen Abstands der Anpressplatte zum Betätigungselement, einem mit der Anpressplatte oder mit dem Rampenring verbundenen Nachstellantrieb zum Nachstellen eines verschleißbedingten Fehlabstands zwischen der Anpressplatte und der Gegenplatte durch eine Relativdrehung des Rampenrings zur Anpressplatte, wobei der Nachstellantrieb ein über ein Energiespeicherelement, insbesondere eine verspannbare Antriebsfeder, an dem Rampenring oder der Anpressplatte angreifbares Ritzel zum Verdrehen des Rampenrings relativ zur Anpressplatte und eine in eine Umfangsverzahnung des Ritzels eingreifbare Antriebsklinke aufweist, wobei die Antriebsklinke bei einer Schließbewegung der Anpressplatte in eine geschlossene Stellung der Reibungskupplung mit dem Ritzel sperrbar ist, und einem in axialer Richtung feststehenden Sensieranschlag zum Anschlagen an der Antriebsklinke ab einem definierten Mindesthubweg der Anpressplatte in Schließrichtung. Mit Hilfe des Energiespeicherelements ist es möglich die Betätigungskraft beim Schließen der Reibungskupplung zum Verdrehen des Ritzels zu nutzen und die dabei entstehende Nachstellenergie in dem Energiespeicherelement zwischenzuspeichern, wodurch der Rampenring zeitlich versetzt beim Öffnen der Reibungskupplung von dem Energiespeicherelement verdreht werden kann, ohne dass es hierbei erforderlich ist das Energiespeicherelement bei einem für ein Nachstellereignis nicht ausreichenden Verschleiß zu belasten oder eine zusätzlich Kraftquelle vorzusehen, so dass ein Betätigen einer Reibungskupplung mit Nachstellfunktion mit geringen mechanischen Lasten ermöglicht ist.

## Beschreibung

Die Erfindung betrifft eine Reibungskupplung sowie ein Verfahren zum Nachstellen eines verschleißbedingten Fehlabstands in einer Reibungskupplung, mit deren Hilfe ein durch Verschleiß von Reibbelägen der Reibungskupplung erhöhter Hubweg einer Anpressplatte nachgestellt und zumindest teilweise kompensiert werden kann.

Reibungskupplungen können zum Ausgleich eines auftretenden Verschleißes von Reibbelägen mit einer kraftgesteuerten Nachstelleinrichtung versehen sein. Hier wird eine infolge eines Verschleißes ungünstige Entwicklung der Anpresskraft eines eine Gegenplatte der Reibungskupplung beaufschlagenden Betätigungssystems zur Bewegung der Anpressplatte, beispielsweise einer Tellerfeder, erfasst und abhängig von der Anpresskraft eine Nachstellung bewirkt. Alternativ kann ein bei einem Verschleiß der Reibbeläge der Kupplungsscheibe auftretender Fehlabstand zwischen dem Kupplungsgehäuse und dem Betätigungssystem ermittelt ("sensieren") und abhängig von dem Fehlabstand korrigiert werden. Zur Korrektur werden dabei zwischen der Gegenplatte und dem Betätigungssystem angeordnete Ausgleichsmittel wie Rampensysteme oder Gewinde verdreht.

Aus DE 10 2009 035 225 A1, WO 2009/056092 A1, DE 10 2011 086 995 A1 ist jeweils eine Reibungskupplung mit einer weggesteuerten Nachstelleinrichtung bekannt, bei der eine sich in Abhängigkeit vom Abstand eines Betätigungssystems mit einer Tellerfeder und einer Anpressplatte axial verlagernde Antriebsklinke eines Sensierblechs auf ein Ritzel einer Spindel wirkt, wobei eine auf der Spindel aufgenommene Spindelmutter bei Verdrehung der Spindel einen zwischen der Anpressplatte und der Tellerfeder angeordneten Rampenring eines Rampensystems relativ zu einer Gegenrampe der Anpressplatte verdreht, wodurch der ursprüngliche Abstand des Betätigungssystems zur Anpressplatte wieder hergestellt wird. Dabei gleitet während des Hubs einer Gegenplatte gegenüber der Anpressplatte die Antriebsklinke auf den Zähnen des Ritzels und rastet bei einem vorgegebenen Verschleiß in eine Zahnlücke zwischen zwei Zähnen ein. Die Antriebsklinke nimmt beim nächsten Öffnungsvorgang der Reibungskupplung das Ritzel formschlüssig mit und verdreht dabei das Ritzel und damit die Spindel, wodurch die Spindelmutter entlang der Spindel bewegt wird und den Rampenring um einen entsprechenden Winkelbetrag verdreht, um die Reibungskupplung dadurch nachzustellen. Der Rampenring weist eine Eingriffsöffnung auf, in die ein von der Spindelmutter abstehender Zahn eingreift, so dass bei einem Verdrehen der Spindel und einer axialen Bewegung der Spindelmutter entlang der Spindel der Zahn der Spindelmutter den Rampenring verdrehen kann. Nachstelleinrichtungen mit einem derartigen Betätigungsprinzip werden auch als "TAC-Spindel" bezeichnet.

Aus DE 10 2012 216 072 A1 ist es bekannt die Antriebsklinke mit einem relativ zum Ritzel verdrehbaren Antriebshebel zu befestigen, wobei der Antriebshebel mit Hilfe einer Vorspannfeder gegen einen axial feststehenden Anschlag gedrückt ist, um einen mit der Anpressplatte mitgegangenen axialen Hubweg des Ritzels in eine Relativdrehung der Antriebsklinke zum Ritzel zu wandeln. Bei einem ausreichend hohen Verschleiß und einem damit verbundenen ausreichend großen Hubweg der Anpressplatte kann der Antriebshebel die Antriebsklinke bei einer Hubbewegung der Anpressplatte in eine Schließrichtung zum Schließen der Reibungskupplung in einen nachfolgenden Zahnzwischenraum der Umfangsverzahnung des Ritzels springen lassen, so dass die Antriebsklinke bei einer Hubbewegung der Anpressplatte in eine der Schließrichtung entgegen gerichteten Öffnungsrichtung zum Öffnen der Reibungskupplung das Ritzel verdrehen und damit über die Spindel den Rampenring relativ zur Anpressplatte verdrehen kann. Eine zum Verdrehen des Ritzels erforderlich Nachstellkraft wird von der Vorspannfeder aufgebracht, die bei jeder Hubbewegung der Anpressplatte in Schließrichtung ausreichend vorgespannt wird.

Es besteht ein ständiges Bedürfnis eine Reibungskupplung mit Nachstellfunktion mit möglichst geringen mechanischen Lasten betätigen zu können.

Es ist die Aufgabe der Erfindung Maßnahmen aufzuzeigen, die ein Betätigen einer Reibungskupplung mit Nachstellfunktion mit geringen mechanischen Lasten ermöglichen.

Die Lösung der Aufgabe erfolgt erfindungsgemäß durch eine Reibungskupplung mit den Merkmalen des Anspruchs 1 sowie ein Verfahren mit den Merkmalen des Anspruchs 10. Bevorzugte Ausgestaltungen der Erfindung sind in den Unteransprüchen angegeben, die jeweils einzeln oder in Kombination einen Aspekt der Erfindung darstellen können.

Erfindungsgemäß ist eine Reibungskupplung, insbesondere zum Kuppeln einer Antriebswelle eines Kraftfahrzeugmotors mit mindestens einer Getriebeeingangswelle eines Kraftfahrzeuggetriebes, vorgesehen mit einer axial verlagerbaren Anpressplatte zum Verpressen einer Kupplungsscheibe zwischen der Anpressplatte und einer Gegenplatte, einem, insbesondere als Hebelfeder ausgestaltetem, Betätigungselement zum Verlagern der Anpressplatte, einem in axialer Richtung zwischen der Anpressplatte und dem Betätigungselement angeordneten relativ verdrehbaren Rampenring zur Veränderung eines axialen Abstands der Anpressplatte zum Betätigungselement, einem mit der Anpressplatte oder mit dem Rampenring verbundenen Nachstellantrieb zum Nachstellen eines verschleißbedingten Fehlabstands zwischen der Anpressplatte und der Gegenplatte durch eine Relativdrehung des Rampenrings zur Anpressplatte, wobei der Nachstellantrieb ein über ein Energiespeicherelement, insbesondere eine verspannbare Antriebsfeder, an dem Rampenring oder der Anpressplatte angreifbares Ritzel zum Verdrehen des Rampenrings relativ zur Anpressplatte und eine in eine Umfangsverzahnung des Ritzels eingreifbare Antriebsklinke aufweist, wobei die Antriebsklinke bei einer Schließbewegung der Anpressplatte in eine geschlossene Stellung der Reibungskupplung mit dem Ritzel sperrbar ist, und einem in axialer Richtung feststehenden Sensieranschlag zum Anschlagen an der Antriebsklinke ab einem definierten Mindesthubweg der Anpressplatte in Schließrichtung.

Wenn noch kein ausreichender Verschleiß von Reibbelägen der Reibungskupplung vorliegt und die Anpressplatte zwischen der geöffneten Stellung und der geschlossenen einen vergleichweise geringen Hubweg überstreicht, wird der Nachstellantrieb, der Teil einer Nachstelleinrichtung zum Nachstellen eines verschleißbedingten Fehlabstands zwischen der Anpressplatte und der Gegenplatte sein kann, mit dem Rampenring und/oder mit der Anpressplatte mitbewegt, ohne dass eine signifikante Drehung des Ritzels auftritt. Allenfalls kann sich die Antriebsklinke in einem Zahnzwischenraum der Umfangsverzahnung des Ritzels etwas hin- und herbewegen. Die Antriebsklinke kann hierbei an einem Zahngrund des Zahnzwischenraums anschlagen ohne hierbei das Ritzel in einem relevanten Ausmaß zu verdrehen. Bei einem hinreichenden Verschleiß überstreicht die Anpressplatte einen so großen Hubweg, dass die an dem Sensieranschlag unmittelbar oder mittelbar anschlagende Antriebsklinke das Ritzel um einen signifikanten Drehwinkel verdrehen kann. Bei der Öffnungsbewegung der Anpressplatte kann die Antriebsklinke bei einem hinreichend großen Drehwinkel des Ritzels dann soweit in ihre ursprüngliche Ausgangslage zurückbewegt werden, dass die Antriebsklinke in einen nachfolgenden Zahnzwischenraum der Umfangsverzahnung springen kann. Hierdurch kann die Antriebsklinke insbesondere auch eine Rückdrehung des Ritzels sperren. Der zwischen dem Betätigungselement und der Anpressplatte vorgesehene Rampenring wird bei einem Schließen der Reibungskupplung mit der über das Betätigungselement eingeleiteten Betätigungskraft zwischen dem Betätigungselement und der Anpressplatte reibschlüssig verklemmt. Der dadurch entstehende Reibschluss ist hierbei in der Regel so hoch, dass das von der Antriebsklinke verdrehte Ritzel keine ausreichend hohe Nachstellkraft aufbringen kann, um den Rampenring während der Schließbewegung der Anpressplatte relativ zur Anpressplatte zu verdrehen. Die von der Antriebsklinke durch das Verdrehen des Ritzels eingeleitete Nachstellenergie kann jedoch, beispielsweise durch das Verspannen einer Antriebsfeder, in dem Energiespeicherelement gespeichert werden. Das Energiespeicherelement kann dadurch auch bei der Öffnungsbewegung der Anpressplatte die Nachstellkraft zum Verdrehen des Rampenrings aufbringen. Hierbei wird die Erkenntnis ausgenutzt, dass in der geöffneten Stellung der Reibungskupplung die von dem Betätigungselement und/oder einer Rückstellfeder aufgebrachte Klemmkraft auf den Rampenring minimal ist, so dass die von dem Energiespeicherelement aufgebrachte Nachstellkraft ausreichen kann den Rampenring relativ zur Anpressplatte zu verdrehen, so dass sich eine axiale Erstreckung eines mit Hilfe des Rampenrings ausgebildeten Rampensystems vergrößern kann, um den verschleißbedingten Fehlabstand der Anpressplatte zur Gegenplatte zumindest teilweise zu überbrücken und durch die dadurch ereichte Nachstellung einen ursprünglich vorgesehenen Hubweg der Anpressplatte zwischen der geöffneten Stellung und der geschlossenen Stellung der Reibungskupplung im Wesentlichen wiederherzustellen.

Hierbei wird die für ein Nachstellereignis erforderliche Nachstellenergie nicht während der Öffnungsbewegung sondern während der Schließbewegung aufgebracht. Das Verdrehen des Rampenrings erfolgt hierbei zeitlich versetzt zum Verdrehen des Ritzels. Das Ritzel wird während der Schließbewegung verdreht, während das Verdrehen des Rampenrings während der Öffnungsbewegung erfolgt. Dies wird durch die Zwischenspeicherung der über das Ritzel eingeleiteten Nachstellenergie in dem Energiespeicherelement erreicht, wobei die Nachstellenergie des Energiespeicherelements in der Öffnungsbewegung bei geringen am Rampenring angreifenden Klemmkräften frei gegeben wird, um den Rampenring zu verdrehen. Die Nachstellenergie kann hierbei durch die über das Betätigungselement eingeleitete Betätigungskraft erzeugt werden, so dass es nicht erforderlich ist eine andere ausreichend hohe Kraftquelle vorzusehen. Insbesondere ist die Betätigungskraft hoch genug, um das Ritzel leicht verdrehen zu können und eine zum Verdrehen des Rampenrings ausreichend hohe Nachstellenergie in dem Energiespeicherelement speichern zu können. Zudem wird das Energiespeicherelement nur bei einem hinreichend hohen Verschleiß mit der Nachstellenergie versorgt, wenn die Antriebsklinke durch das Anschlagen an dem Sensieranschlag das Ritzel weit genug verdreht hat. Dadurch wird vermieden, dass ein Energiespeicherelement, ein Federelement oder ein anderes Bauteil auch bei einem für ein Nachstellereignis nicht ausreichenden Verschleiß für die Durchführung eines Nachstellereignisses vorsorglich und in den meisten Fällen unnötigerweise belastet wird. Dadurch sind unnötige dynamische Lasten auf Bauteile der Nachstelleinrichtung vermieden, so dass auf Komponenten der Reibungskupplung im Betrieb geringere mechanische Lasten wirken. Die entsprechenden Bauteile können dadurch kleiner und damit gewichtsparender und kostengünstiger, dimensioniert werden. Mit Hilfe des Energiespeicherelements ist es möglich die Betätigungskraft beim Schließen der Reibungskupplung zum Verdrehen des Ritzels zu nutzen und die dabei entstehende Nachstellenergie in dem Energiespeicherelement zwischenzuspeichern, wodurch der Rampenring zeitlich versetzt beim Öffnen der Reibungskupplung von dem Energiespeicherelement verdreht werden kann, ohne dass es hierbei erforderlich ist das Energiespeicherelement bei einem für ein Nachstellereignis nicht ausreichenden Verschleiß zu belasten oder eine zusätzlich Kraftquelle vorzusehen, so dass ein Betätigen einer Reibungskupplung mit Nachstellfunktion mit geringen mechanischen Lasten ermöglicht ist.

Die Antriebsklinke kann als Freilauf wirken, der bei einer Bewegung der Anpressplatte in Schließrichtung mit dem Ritzel sperrt und das Ritzel verdrehen kann und bei einer Bewegung der Anpressplatte in Öffnungsrichtung an der Umfangsverzahnung des Ritzels frei läuft und in einen nachfolgenden Zahnzwischenraum gelangen kann. Die Reibungskupplung kann insbesondere im Übrigen wie in DE 10 2012 216 072 A1 beschrieben aus- und weitergebildet sein, auf deren Inhalt hiermit als Teil der Erfindung Bezug genommen wird. Das Ritzel kann insbesondere eine Spindel verdrehen, auf dem eine Spindelmutter aufgeschraubt ist. Wenn der Nachstellantrieb mit der Anpressplatte verbunden ist, kann die Spindelmutter in den Rampenring eingreifen. Wenn der Nachstellantrieb mit dem Rampenring verbunden ist, kann die Spindelmutter in die Anpressplatte eingreifen.

Das Energiespeicherelement kann im Kraftfluss zwischen dem Ritzel und dem von dem Ritzel angetriebenen Rampenring beziehungsweise Anpressplatte vorgesehen sein. Das Energiespeicherelement ist beispielsweise als Federspeicher ausgestaltet, der mindestens ein von dem Ritzel komprimierbares Federelement aufweist, das sich zum Verdrehen des Rampenrings entspannen kann, wenn die von dem Energiespeicherelement aufgebrachte Nachstellkraft die an dem Rampenring angreifende Klemmkraft überwinden kann. Aufgrund der vergleichsweise geringen Vortriebswege bei einem Nachstellereignis, kann das Energiespeicherelement auch durch die Elastizität der Bauteile des Nachstellantriebs ausgebildet werden. Insbesondere kann sich bei einem Verdrehen des Ritzels im Kraftfluss zwischen dem Ritzel und dem von dem Ritzel angetriebenen Rampenring beziehungsweise Anpressplatte Bauteile des Nachstellantriebs elastisch verformen und die durch die Formänderung gespeicherte Nachstellenergie aufgrund der Sperrung der Rückdrehung des Ritzels bei einem Nachstellereignis während der Öffnungsbewegung der Anpressplatte in einem Verdrehen des Rampenrings wieder freisetzen. Hierzu kann beispielsweise eine Teilstrecke einer von dem Ritzel angetriebenen Spindel zwischen dem Ritzel und einem auf der Spindel aufgeschraubten Spindelmutter elastisch tordiert werden. Hierbei kann die Elastizität und/oder der Abstand der Spindelmutter zum Ritzel zur Dimensionierung der Energiespeicherfunktion der Spindel entsprechend ausgelegt werden, so dass insbesondere ein Blockieren des Nachstellantriebs während der Schließbewegung der Anpressplatte vermieden werden kann. Ein zu den sowieso vorgesehenen Funktionsbauteilen des Nachstellantriebs zusätzlich vorgesehenes separates Energiespeicherelement kann dadurch eingespart werden. Zusätzlich oder alternativ kann ein elastischer Verzahnungseingriff in das Ritzel und/oder eine in axialer Richtung elastische Lagerung der Spindel vorgesehen sein.

Das Betätigungselement kann insbesondere als Hebelfeder ausgestaltet sein, die einen Tellerfederring zur Bereitstellung einer Tellerfederfunktion aufweisen kann, von dem nach radial innen Federzungen abstehen können. Über die Federzungen kann eine von einem insbesondere hydraulischen Betätigungssystem aufgebrachte Betätigungskraft in die Hebelfeder eingeleitet werden. Das Betätigungselement kann alternativ als abgesehen von der eigenen Elastizität im Wesentlichen ausschließlich axial verschiebbarer Betätigungstopf ausgestaltet sein. Die Reibungskupplung kann insbesondere eine als Schwungscheibe wirkende Gegenplatte aufweisen. Die Gegenplatte ist insbesondere mit einer Antriebswelle eines Kraftfahrzeugmotors gekoppelt, um ein vom Kraftfahrzeugmotor erzeugtes Drehmoment in die Reibungskupplung einzuleiten. Die Anpressplatte kann insbesondere eine Kupplungsscheibe zwischen der Gegenplatte und der Anpressplatte in der geschlossenen Stellung der Reibungskupplung reibschlüssig verpressen. Die Kupplungsscheibe ist insbesondere mit einer Getriebeeingangswelle eines Kraftfahrzeuggetriebes gekoppelt, um das in der geschlossenen Stellung der Reibungskupplung aufgenommene Drehmoment aus der Reibungskupplung auszuleiten. Die Kupplungsscheibe kann insbesondere an beiden Axialseiten verschleißbehaftete Reibbeläge aufweisen, deren Dicke in axialer Richtung im Verschleiß geringer wird, wodurch sich die geschlossene Stellung der Reibungskupplung in Richtung der Gegenplatte verschleißbedingt verlagert und eine verschleißbedingte Fehlstellung der Anpressplatte zur Gegenplatte verursacht.

Insbesondere ist ein mit der Anpressplatte und/oder mit dem Rampenring gekoppelter Wegbegrenzer zur Begrenzung eines Hubwegs der Anpressplatte in eine der Schließrichtung entgegen gesetzten Öffnungsrichtung vorgesehen, wobei der Wegbegrenzer insbesondere an dem Sensieranschlag anschlagbar ist. Durch den Wegbegrenzer kann die geöffnete Stellung der Reibungskupplung definiert vorgegeben werden. Beispielsweise kann die Anpressplatte von einer insbesondere als Blattfeder ausgestalteten Rückstellfeder in die geöffnete Stellung der Reibungskupplung verlagert werden. Die Rückstellfeder kann dadurch mit einer Haltekraft die Anpressplatte über den Wegbegrenzer gegen einen Gegenanschlag, insbesondere den Sensieranschlag, drücken. Ein Klappern in der geöffneten Stellung kann dadurch vermieden werden. Insbesondere kann dadurch erreicht werden, dass die Rückstellfeder nicht die Anpressplatte über den Rampenring mit einer Haltekraft gegen das Betätigungselement drückt. Eine durch die Rückstellfeder aufgebrachte Klemmkraft auf den Rampenring kann dadurch vermieden werden. Dadurch kann nach einem Anschlagen des Wegbegrenzers die Klemmkraft auf den Rampenring minimiert werden, so dass das Energiespeicherelement erforderlichenfalls den Rampenring verdrehen kann.

Vorzugsweise ist eine zum Anschlagen wirksame axiale Erstreckung des Wegbegrenzers im Wesentlichen entsprechend eines durch die Relativdrehung des Rampenrings verursachten Nachstellwegs in axialer Richtung veränderlich. In dem gleichen Ausmaß wie der Rampenring eine Nachstellung bewirkt kann auch der Wegbegrenzer nachgeführt werden. Beispielsweise ist der Wegbegrenzer als Rampe ausgeführt, die mit dem Rampenring drehfest verbunden ist und die gleiche Rampensteigung in Umfangsrichtung aufweist. Alternativ kann der Wegbegrenzer beispielsweise von einer auf einer von dem Ritzel angetriebenen Spindel aufgeschraubten Spindelmutter verdreht werden, wodurch der Wegbegrenzer über die Spindelmutter mit dem Rampenring gekoppelt sein kann.

Besonders bevorzugt lässt das Betätigungselement einen Maximalhubweg der Anpressplatte in Schließrichtung zu, wobei der Wegbegrenzer den Hubweg der Anpressplatte auf einen geringeren Hubweg als den Maximalhubweg begrenzt. Die Anpressplatte überstreicht dadurch einen geringeren Hubweg beim Öffnen der Reibungskupplung als das Betätigungselement zulassen würde. Dadurch ist es möglich, dass in der geöffneten Stellung das Betätigungselement lediglich locker auf dem Rampenring aufliegt oder sogar von dem Rampenring abhebt, so dass in der geöffneten Stellung auf den Rampenring wirkende Klemmkräfte minimiert werden können.

Insbesondere weist der Nachstellantrieb ein über ein Ritzel antreibbares Verstellelement, insbesondere eine auf einer von dem Ritzel antreibbaren Spindel aufgeschraubte Spindelmutter, zum relativen Verdrehen des Rampenrings auf, wobei das Energiespeicherelement in Kraftflussrichtung zwischen dem Ritzel und dem Verstellelement oder zwischen dem Verstellelement und dem relativ zum Nachstellantrieb verdrehbaren Rampenring oder der relativ zum Nachstellantrieb verdrehbaren Anpressplatte angeordnet ist. Das Energiespeicherelement kann durch bewusst vorgesehene Elastizitäten im Kraftfluss ausgebildet sein oder als ein separates im Kraftfluss vorgesehenes Bauteil vorgesehen sein. Das Energiespeicherelement kann hierbei beispielsweise als zwischen dem Ritzel und dem Verstellelement oder zwischen dem Verstellelement und dem Rampenring beziehungsweise der Anpressplatte vorgesehene verspannbare Antriebsfeder ausgebildet sein, die bei einer Drehung des Ritzels in axialer Richtung komprimiert wird und sich bei einer hinreichend geringen auf den Rampenring wirkenden Klemmkraft entspannen und in axialer Richtung zum Verdrehen des Rampenrings expandieren kann.

Vorzugsweise weist der Nachstellantrieb eine an dem Ritzel angreifende Rückdrehsperre zum Sperren des Ritzels gegen eine Drehung in einer entgegen der von der Antriebsklinke einleitbaren Nachstellrichtung gerichteten Rückdrehrichtung auf, wobei die Rückdrehsperre insbesondere als eine in die Umfangsverzahnung des Ritzels eingreifende Sperrklinke, eine an der Umfangsverzahnung reibschlüssig anliegenden Klemmzunge, ein an dem Ritzel angreifender Klemmkörperfreilauf, ein an dem Ritzel angreifender Schlingfederfreilauf oder eine an dem Ritzel angreifende richtungsabhängige oder richtungsunabhängige Bremse ausgestaltet ist. Durch die Rückdrehsperre kann erreicht werden, dass die Antriebsklinke bei einer Bewegung entgegen der Antriebsrichtung während der Öffnungsbewegung der Anpressplatte das Ritzel nicht reibschlüssig zurückdreht. Bei einem Eingriff der Antriebsklinke in die Umfangsverzahnung des Ritzels bei einer Bewegung der Anpressplatte in Schließrichtung verlagert sich die Antriebsklinke relativ zum Ritzel in Antriebsrichtung und kann bei einem ausreichenden Verschleiß das Ritzel in Nachstellrichtung verdrehen.

Besonders bevorzugt ist die Antriebsklinke mit einem relativ zum Ritzel verdrehbaren Antriebshebel verbunden, wobei der Antriebshebel, insbesondere mit einer von einer Vorspannfeder aufgebrachten Federkraft, an dem Sensieranschlag anliegt. Durch den Antriebshebel können die Eingriffsverhältnisse der Antriebsklinke in die Umfangsverzahnung des Ritzels im Wesentlichen konstant gehalten werden. Der Antriebshebel kann insbesondere relativ drehbar zur Spindel und relativ drehbar zum Ritzel an der Spindel gelagert sein. Der Antriebshebel kann beispielsweise mit Spielpassung auf die Spindel aufgesteckt werden und gegebenenfalls an einer axialen Seite oder an beiden axialen Seiten mit einem Sicherungsring in axialer Richtung gesichert werden. Insbesondere ist der Antriebshebel an einer axialen Seite durch das Ritzel begrenzt. Besonders bevorzugt kann der Antriebshebel einen ersten Haltearm und einen zweiten Haltearm aufweisen, wobei der erste Haltearm und der zweite Haltearm benachbart zu unterschiedlichen Stirnseiten des Ritzels mit der Spindel gelagert werden können. Der Antriebsarm kann dadurch das Ritzel in axialer Richtung umgreifen, so dass für die Antriebsklinke und vorzugsweise für mehrere Antriebsklinken, ein stabiles definiertes Gegenlager ausgebildet ist. In dieser Ausführungsform ist es nicht erforderlich den Antriebshebel mit Sicherungsringen axial zu sichern, da bei einem unbeabsichtigten axialen Versatz des Antriebshebels entweder der erste Haltearm oder der zweite Haltearm an einer Stirnseite des Ritzels anschlagen würde.

Insbesondere ist der Sensieranschlag mit der Gegenplatte oder einem mit der Gegenplatte verbundenen Kupplungsdeckel bewegungsfest verbunden. Der Sensieranschlag kann dadurch einen bewegungsfesten Bezugspunkt ausbilden, von dem aus ein weggesteuertes Nachstellereignis ausgelöst werden kann. Der Sensieranschlag kann beispielsweise von der Gegenplatte in axialer Richtung abstehen und durch die Anpressplatte hindurchgeführt sein. Ferner ist es möglich, dass der Sensieranschlag von dem Kupplungsdeckel in radialer Richtung absteht, so dass eine Öffnung in der Anpressplatte für den Sensieranschlag nicht vorgesehen werden braucht.

Vorzugsweise ist die Antriebsklinke in einer entgegen der von der Antriebsklinke in das Ritzel einleitbaren Nachstellrichtung gerichteten Rückdrehrichtung des Ritzels ab einer Grenzkraft nachgiebig ausgestaltet. Die Antriebsklinke kann beispielsweise mit Hilfe eines Vorspannblechs befestigt sein, wobei das Vorspannblech bei Erreichung der Grenzkraft von der Antriebsklinke abheben kann und ein Wegfedern der Antriebsklinke von dem Ritzel ermöglicht. Dadurch kann eine Beschädigung der Antriebsklinke oder ein fehlendes Erreichen der geschlossenen Stellung der Reibungskupplung bei einem beispielsweise durch Korrosion blockierenden Ritzel vermieden werden.

Die Erfindung betrifft ferner ein Verfahren zum Nachstellen eines verschleißbedingten Fehlabstands in einer Reibungskupplung, die wie vorstehend beschrieben aus- und weitergebildet sein kann, bei dem während einer Hubbewegung der Anpressplatte in einer Schließrichtung zum Schließen der Reibungskupplung das Ritzel des Nachstellantriebs von der Antriebsklinke mit Hilfe einer von dem Betätigungselement eingeleiteten Betätigungskraft verdreht wird und dabei eine Nachstellenergie zum Verdrehen des Rampenrings in dem Energiespeicherelement gespeichert wird und nachfolgend bei einer Hubbewegung der Anpressplatte in einer der Schließrichtung entgegen gerichteten Öffnungsrichtung zum Öffnen der Reibungskupplung eine auf den Rampenring wirkende Klemmkraft soweit reduziert wird, dass infolge der von dem Energiespeicherelement aufgebrachten Nachstellkraft der Rampenring relativ zu der Anpressplatte verdreht wird. Das Verfahren kann insbesondere wie vorstehend anhand der Reibungskupplung erläutert aus- und weitergebildet sein. Mit Hilfe des Energiespeicherelements ist es möglich die Betätigungskraft beim Schließen der Reibungskupplung zum Verdrehen des Ritzels zu nutzen und die dabei entstehende Nachstellenergie in dem Energiespeicherelement zwischenzuspeichern, wodurch der Rampenring zeitlich versetzt beim Öffnen der Reibungskupplung von dem Energiespeicherelement verdreht werden kann, ohne dass es hierbei erforderlich ist das Energiespeicherelement bei einem für ein Nachstellereignis nicht ausreichenden Verschleiß zu belasten oder eine zusätzlich Kraftquelle vorzusehen, so dass ein Betätigen einer Reibungskupplung mit Nachstellfunktion mit geringen mechanischen Lasten ermöglicht ist.

Nachfolgend wird die Erfindung unter Bezugnahme auf die anliegenden Zeichnungen exemplarisch erläutert, wobei die nachfolgend dargestellten Merkmale sowohl jeweils einzeln als auch in Kombination einen Aspekt der Erfindung darstellen können. Es zeigen:
Fig. 1: eine Prinzipdarstellung eines Teils einer Reibungskupplung,
Fig. 2: eine alternative Prinzipdarstellung der Reibungskupplung aus Fig. 1,
Fig. 3: eine schematische Schnittansicht einer ersten Ausführungsform der Reibungskupplung aus Fig. 1 und
Fig. 4: eine schematische Schnittansicht einer zweiten Ausführungsform der Reibungskupplung aus Fig. 1.

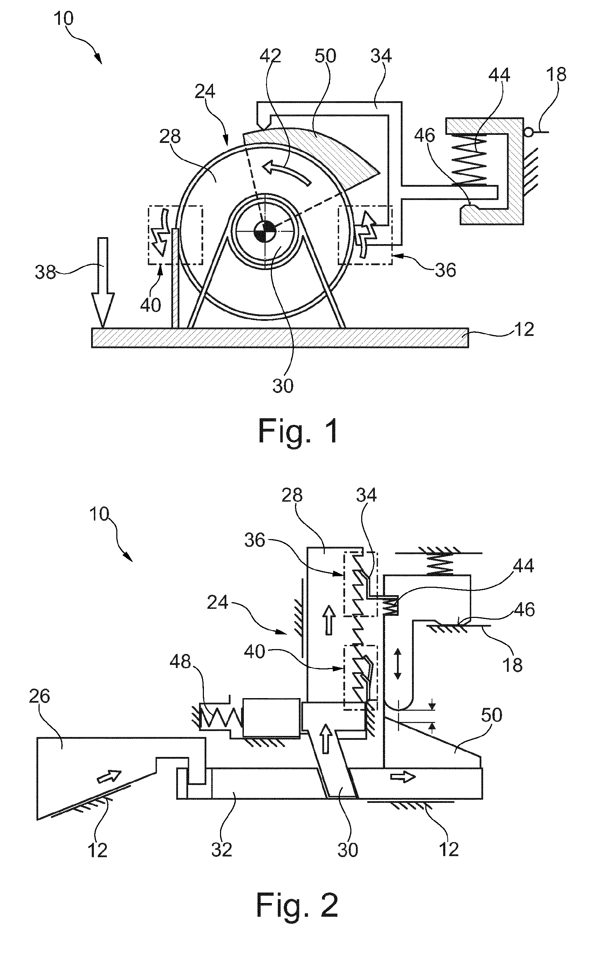

Die in Fig. 1 und Fig. 2 jeweils modellhaft dargestellte Reibungskupplung 10 weist eine Anpressplatte 12 auf, die mit Hilfe eines als Tellerfeder ausgestalteten Betätigungselements 14 relativ zu einer Gegenplatte 16 und einem mit der Gegenplatte 16 fest verbundenen Kupplungsdeckel 18 in axialer Richtung verlagert werden kann, um eine verschleißbehaftete Reibbeläge 20 aufweisende Kupplungsscheibe 22 in der geschlossenen Stellung der Reibungskupplung 10 reibschlüssig zwischen der Anpressplatte 12 und der Gegenplatte 16 zu verpressen, so dass ein über die Gegenplatte 16 eingeleitetes Drehmoment einer Antriebswelle eines Kraftfahrzeugmotors an eine mit der Kupplungsscheibe gekoppelte Getriebeeingangswelle eines Kraftfahrzeuggetriebes übertragen werden kann. Die Reibungskupplung 10 weist einen Nachstellantrieb 24 einer Nachstelleinrichtung zum Nachstellen eines verschleißbedingten Fehlabstands der Anpressplatte 12 zur Gegenplatte 16 aus, wobei der Nachstellantrieb im dargestellten Ausführungsbeispiel mit der Anpressplatte 12 befestigt ist aber alternativ auch mit einem zwischen dem Betätigungselement 14 und der Anpressplatte 12 angeordneten Rampenring 26 befestigt sein kann. Der Nachstellantrieb 24 weist ein Ritzel 28 auf, das beispielsweise elastisch mit einer Spindel 30 verbunden ist. Auf der Spindel 30 ist eine Spindelmutter 32 aufgeschraubt, die bei einer Drehung der Spindel 30 entlang der Längsrichtung der Spindel 30 verlagert werden kann. Die Spindelmutter 32 greift beispielsweise elastisch in den Rampenring 26 ein, um ihn relativ zur Anpressplatte 12 zu verdrehen. Durch die Verdrehung des Rampenrings 26 kann eine axiale Erstreckung eines durch den Rampenring 26 und die Anpressplatte 12 ausgebildeten Rampensystems vergrößert werden, um die geöffnete Stellung der Anpressplatte 12 um einen durch den Verschleiß der Reibbeläge entstandene zusätzlich Wegstrecke für den Hubweg der Anpressplatte 12 in Richtung der Gegenplatte 16 zu verlagern.

Das Ritzel 28 kann mit Hilfe eines als Antriebsklinke 34 eines Sensierblechs ausgestalteten Antriebselements verdreht werden. Die Antriebsklinke 34 kann hierzu mit dem Ritzel 28 einen Vortriebsfreilauf 36 ausbilden, der bei einer Verlagerung der Anpressplatte 12 mit Hilfe einer Betätigungskraft 38 in einer Schließrichtung bei einem ausreichenden verschleißbedingten Hubweg der Anpressplatte 12 das Ritzel verdrehen kann und bei einer Verlagerung der Anpressplatte 12 in eine geöffnete Stellung der Reibungskupplung 10 an einer Außenverzahnung des Ritzels 28 frei laufend abgleiten kann. Das Abgleiten der Antriebsklinke 34 an dem Ritzel 28 während der Öffnungsbewegung der Anpressplatte kann durch eine als Freilauf ausgestalte Rückdrehsperre 40 unterstützt werden, die eine durch die Antriebsklinke 34 verursachte Drehung des Ritzels 28 in eine Nachstellrichtung 42 zulässt und eine Drehung des Ritzels 28 in eine der Nachstellrichtung 42 entgegen gesetzte Rückdrehrichtung formschlüssig und/oder reibschlüssig sperrt. Die Freilauffunktion des Vortriebsfreilauf 36 und der Rückdrehsperre 40 sind gleichsinnig orientiert.

Die Antriebsklinke 34 kann an ihrem von dem Ritzel 28 weg weisenden Ende mit Hilfe einer Vorspannfeder 44 gegen einen feststehenden Sensieranschlag 46 gedrückt werden, so dass sich bei einer axialen Bewegung der Anpressplatte 12 und des Nachstellantriebs 24 eine Relativbewegung zwischen dem Ritzel 28 und der Antriebsklinke 34 ergibt, die zu einem wegbasierten Nachstellen durch ein Verdrehen des Ritzels 28 und des Rampenrings 26 genutzt werden kann. Die Antriebsklinke 34 kann bei einem hinreichend großen Verschleiß und einem entsprechenden Hubweg der Anpressplatte 12 das Ritzel 28 während der Schließbewegung der Anpressplatte 12 mit Hilfe der Betätigungskraft 38 verdrehen, wobei gleichzeitig der Rampenring 26 zwischen dem Betätigungselement 14 und der Anpressplatte 12 durch eine durch die Betätigungskraft 38 verursachte Klemmkraft im Wesentlich nicht drehbar verklemmt ist. Die durch das Verdrehen des Ritzels 28 eingeleitete Nachstellenergie kann in einem Energiespeicherelement 48 zwischen gespeichert werden, das beispielsweise durch eine separat vorgesehene verspannbare Antriebsfeder und/oder die elastische Verformbarkeit des Nachstellantriebs 24 ausgebildet sein kann. Wenn bei einer Öffnungsbewegung der Anpressplatte 12 die Klemmkraft auf den Rampenring 26 sinkt, kann das Energiespeicherelement 48 die Klemmkraft überwinden und den Rampenring 26 relativ zur Anpressplatte 12 verdrehen. Hierzu kann die Öffnungsbewegung der Anpressplatte 12 von einem Wegbegrenzer 50 gestoppt werden, bevor die von dem Betätigungselement 14 zugelassene maximale Abhubstellung erreicht ist, so dass die von dem Betätigungselement 14 und/oder einer an der Anpressplatte 12 angreifenden Rückstellfeder auf den Rampenring 26 aufgebrachte Klemmkraft minimiert werden kann. Der Wegbegrenzer 50 kann in dem Ausmaß der durchgeführten Nachstellung nachgeführt werden, so dass der Hubweg der Anpressplatte 12 zwischen der durch den nachgeführten Wegbegrenzer 50 definierten geöffneten Stellung und der geschlossenen Stellung im Wesentlichen konstant bleiben kann. Zum Nachführen des Wegbegrenzers 50 kann der Wegbegrenzer 50 beispielsweise rampenförmig ausgestaltet sein und über die Spindelmutter 32 mit der Winkellage des Rampenrings 26 gekoppelt sein.

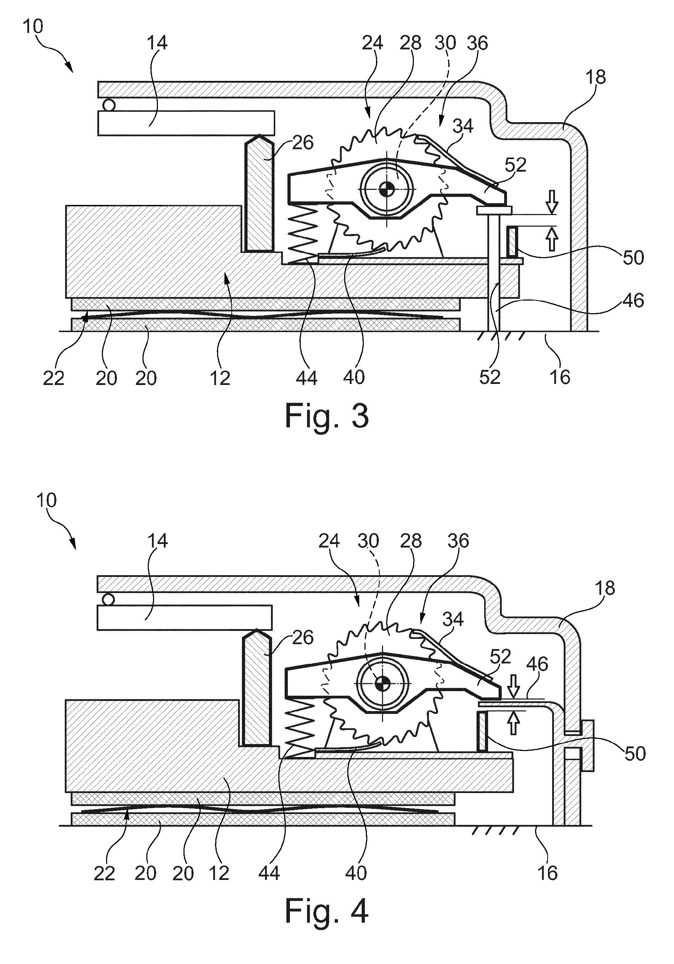

Wie in Fig. 3 dargestellt, kann die Antriebsklinke 34 mit einem relativ zum Ritzel 28 um eine gemeinsame Drehachse verdrehbaren Antriebshebel 52 verbunden sein, der von der Vorspannfeder 44 gegen den Sensieranschlag 46 gedrückt ist. Die Eingriffsverhältnisse der Antriebsklinke 34 zum Ritzel 28 können dadurch im Wesentlichen unabhängig vom Verschleißzustand der Reibbeläge 20 sein. Ferner ist der Sensieranschlag 46 mit der Gegenplatte 16 verbunden und durch eine in der Anpressplatte 12 vorgesehene Durchgangsöffnung 52 hindurchgeführt. Der Sensieranschlag 46 weist eine in radialer Richtung ausgestaltete Erstreckung auf, die es ermöglicht, dass an einer Axialseite die Antriebsklinke 34 mittelbar über den Antriebshebel 52 anschlagen kann, während an der von dieser Axialseite wegweisenden Axialseite der nachführbare Wegbegrenzer 50 anschlagen kann.

Wie in Fig. 4 dargestellt kann im Vergleich zu der in Fig. 3 dargestellten Reibungskupplung 10 der Sensieranschlag 46 alternativ mit dem Kupplungsdeckel 16 verbunden sein und eine im Wesentlichen radiale Erstreckung aufweisen. Dadurch bildet der Sensieranschlag 46 ebenfalls eine Axialseite, an der die Antriebsklinke 34 mittelbar über den Antriebshebel 52 anschlagen kann, und eine andere Axialseite aus, an welcher der nachführbare Wegbegrenzer 50 anschlagen kann, wobei die in der Anpressplatte 12 vorgesehene Durchgangsöffnung 52 eingespart ist.

Bei den in Fig. 3 und Fig. 4 dargestellten Ausführungsformen der Reibungskupplung 10 kann bei einer ausreichenden Federkraft der Vorspannfeder 44 der nachführbare Wegbegrenzer 50 alternativ an dem Sensieranschlag 46 vorbeigeführt sein und an dem Antriebshebel 52 anschlagen. Ferner ist in den vorstehend exemplarisch dargestellten Ausführungsformen der Reibungskupplung 10 der Nachstellantrieb 24 mit der Anpressplatte 12 verbunden, wobei es alternativ auch möglich ist den Nachstellantrieb 24 mit dem Rampenring 26 zu verbinden. In dieser Ausführungsform kann insbesondere eine Spindelmutter 32 in die Anpressplatte 12 eingreifen und/oder der nachführbare Wegbegrenzer 50 ohne Verbindung mit der Spindelmutter 32 ausgeführt sein.

### Bezugszeichenliste

- 10: Reibungskupplung
- 12: Anpressplatte
- 14: Betätigungselement
- 16: Gegenplatte
- 18: Kupplungsdeckel
- 20: Reibbelag
- 22: Kupplungsscheibe
- 24: Nachstellantrieb
- 26: Rampenring
- 28: Ritzel
- 30: Spindel
- 32: Spindelmutter
- 34: Antriebsklinke
- 36: Vortriebsfreilauf
- 38: Betätigungskraft
- 40: Rückdrehsperre
- 42: Nachstellrichtung
- 44: Vorspannfeder
- 46: Sensieranschlag
- 48: Energiespeicherelement
- 50: Wegbegrenzer
- 52: Antriebshebel
- 52: Durchgangsöffnung

## Patentansprüche

1. Reibungskupplung, insbesondere zum Kuppeln einer Antriebswelle eines Kraftfahrzeugmotors mit mindestens einer Getriebeeingangswelle eines Kraftfahrzeuggetriebes, mit einer axial verlagerbaren Anpressplatte (12) zum Verpressen einer Kupplungsscheibe (22) zwischen der Anpressplatte (12) und einer Gegenplatte (16),
einem, insbesondere als Hebelfeder ausgestaltetem, Betätigungselement (14) zum Verlagern der Anpressplatte (12),
einem in axialer Richtung zwischen der Anpressplatte (12) und dem Betätigungselement (14) angeordneten relativ verdrehbaren Rampenring (26) zur Veränderung eines axialen Abstands der Anpressplatte (12) zum Betätigungselement (14),
einem mit der Anpressplatte (12) oder mit dem Rampenring (26) verbundenen Nachstellantrieb (24) zum Nachstellen eines verschleißbedingten Fehlabstands zwischen der Anpressplatte (12) und der Gegenplatte (16) durch eine Relativdrehung des Rampenrings (26) zur Anpressplatte (12),
wobei der Nachstellantrieb (24) ein über ein Energiespeicherelement (48), insbesondere eine verspannbare Antriebsfeder, an dem Rampenring (26) oder der Anpressplatte (12) angreifbares Ritzel (28) zum Verdrehen des Rampenrings (26) relativ zur Anpressplatte (12) und eine in eine Umfangsverzahnung des Ritzels (28) eingreifbare Antriebsklinke (34) aufweist, wobei die Antriebsklinke (34) bei einer Schließbewegung der Anpressplatte (12) in eine geschlossene Stellung der Reibungskupplung (10) mit dem Ritzel (28) sperrbar ist, und
einem in axialer Richtung feststehenden Sensieranschlag (46) zum Anschlagen an der Antriebsklinke (34) ab einem definierten Mindesthubweg der Anpressplatte (12) in Schließrichtung.

2. Reibungskupplung nach Anspruch 1 **dadurch gekennzeichnet, dass** ein mit der Anpressplatte (12) und/oder mit dem Rampenring gekoppelter Wegbegrenzer (50) zur Begrenzung eines Hubwegs der Anpressplatte (12) in eine der Schließrichtung entgegen gesetzten Öffnungsrichtung vorgesehen ist, wobei der Wegbegrenzer (50) insbesondere an dem Sensieranschlag (46) anschlagbar ist.

3. Reibungskupplung nach Anspruch 2 **dadurch gekennzeichnet, dass** eine zum Anschlagen wirksame axiale Erstreckung des Wegbegrenzers (50) im Wesentlichen entsprechend eines durch die Relativdrehung des Rampenrings (26) verursachten Nachstellwegs in axialer Richtung veränderlich ist.

4. Reibungskupplung nach Anspruch 2 oder 3 **dadurch gekennzeichnet, dass** das Betätigungselement (14) einen Maximalhubweg der Anpressplatte (12) in Schließrichtung zulässt, wobei der Wegbegrenzer (50) den Hubweg der Anpressplatte (12) auf einen geringeren Hubweg als den Maximalhubweg begrenzt.

5. Reibungskupplung nach einem der Ansprüche 1 bis 4 **dadurch gekennzeichnet, dass** der Nachstellantrieb (24) ein über ein Ritzel (28) antreibbares Verstellelement, insbesondere eine auf einer von dem Ritzel (28) antreibbaren Spindel (30) aufgeschraubte Spindelmutter (32), zum relativen Verdrehen des Rampenrings (26) aufweist, wobei das Energiespeicherelement (48) in Kraftflussrichtung zwischen dem Ritzel (28) und dem Verstellelement oder zwischen dem Verstellelement und dem relativ zum Nachstellantrieb (24) verdrehbaren Rampenring (26) oder der relativ zum Nachstellantrieb (24) verdrehbaren Anpressplatte (12) angeordnet ist.

6. Reibungskupplung nach einem der Ansprüche 1 bis 5 **dadurch gekennzeichnet, dass** der Nachstellantrieb (24) eine an dem Ritzel (28) angreifende Rückdrehsperre (40) zum Sperren des Ritzels (28) gegen eine Drehung in einer entgegen der von der Antriebsklinke (34) einleitbaren Nachstellrichtung (42) gerichteten Rückdrehrichtung aufweist, wobei die Rückdrehsperre (40) insbesondere als eine in die Umfangsverzahnung des Ritzels (28) eingreifende Sperrklinke, eine an der Umfangsverzahnung reibschlüssig anliegenden Klemmzunge, ein an dem Ritzel (28) angreifender Klemmkörperfreilauf, ein an dem Ritzel (28) angreifender Schlingfederfreilauf oder eine an dem Ritzel (28) angreifende richtungsabhängige oder richtungsunabhängige Bremse ausgestaltet ist.

7. Reibungskupplung nach einem der Ansprüche 1 bis 6 **dadurch gekennzeichnet, dass** die Antriebsklinke (34) mit einem relativ zum Ritzel (28) verdrehbaren Antriebshebel (52) verbunden ist, wobei der Antriebshebel (52), insbesondere mit einer von einer Vorspannfeder (44) aufgebrachten Federkraft, an dem Sensieranschlag (46) anliegt.

8. Reibungskupplung nach einem der Ansprüche 1 bis 7 **dadurch gekennzeichnet, dass** der Sensieranschlag (46) mit der Gegenplatte (16) oder einem mit der Gegenplatte (16) verbundenen Kupplungsdeckel (18) bewegungsfest verbunden ist.

9. Reibungskupplung nach einem der Ansprüche 1 bis 8 **dadurch gekennzeichnet, dass** die Antriebsklinke (34) in einer entgegen der von der Antriebsklinke (34) in das Ritzel (28) einleitbaren Nachstellrichtung (42) gerichteten Rückdrehrichtung des Ritzels (28) ab einer Grenzkraft nachgiebig ausgestaltet ist.

10. Verfahren zum Nachstellen eines verschleißbedingten Fehlabstands in einer Reibungskupplung (10) nach einem der Ansprüche 1 bis 9, bei dem
während einer Hubbewegung der Anpressplatte (12) in einer Schließrichtung zum Schließen der Reibungskupplung (10) das Ritzel (28) des Nachstellantriebs (24) von der Antriebsklinke (34) mit Hilfe einer von dem Betätigungselement (14) eingeleiteten Betätigungskraft (38) verdreht wird und dabei eine Nachstellenergie zum Verdrehen des Rampenrings (26) in dem Energiespeicherelement (48) gespeichert wird und
nachfolgend bei einer Hubbewegung der Anpressplatte (12) in einer der Schließrichtung entgegen gerichteten Öffnungsrichtung zum Öffnen der Reibungskupplung (10) eine auf den Rampenring (26) wirkende Klemmkraft soweit reduziert wird, dass infolge der von dem Energiespeicherelement (48) aufgebrachten Nachstellkraft der Rampenring (26) relativ zu der Anpressplatte (12) verdreht wird.
